# EUROPEAN PATENT APPLICATION

(11) **EP 2 216 634 A1**
(43) Date of publication of application: **11.08.2010**
(21) Application number: 09001858.1
(22) Date of filing: 10.02.2009
(51) Int. Cl.: G01G 19/44

(54) **A one ball of the foot scale**

(71) Applicant: Designit A/S, 8000 Århus C (DK)
(72) Inventor: Geert-Jensen, Anders, 8240 Risskov (DK)
(74) Representative: Sundien, Thomas

(57) **Abstract**

A one foot ball scale 100 for weighing a human comprising a housing 102, where the housing 102 comprises a half-foot sized surface part 104 that is connected to at least one weight detecting means 108. The weight detecting means 108 are configured to provide a sequence of digital sample values to a processing unit 106. The processing unit 106 is configured to calculate an average weight of the human from the sequence of digital samples, and an output unit 112 that provides the calculated weight of the human.

## Description

### Technical field

The present invention relates to a compact digital scale, for measuring the weight of a person by use of at least the ball of one foot.

### Background

When focusing on well-being, control of weight is an important issue. Conventional scales are known to be large and visually unattractive, which from an esthetical perspective might affect persons having difficulties to hold a normal weight.

On the market today there are known scales configured for a person standing with both feet on a weighting surface of the scale to measure the weight which is displayed on a display, e.g. a LCD. Likewise, there are scales configured for one foot. However, these one foot scales are associated with drawbacks. One drawback is that they are still large due to the need of supporting essentially the whole foot. Another drawback with known one foot scales is that standing on one foot makes the instantaneous weighing less user friendly and more unreliable. This can be due to the person accelerates vertically in the beginning and the end of the weighing session. It can also be due to the fact that, when "holding the balance" the person's corrections will give a turning in the weighing. Twitching of the muscles when standing on one foot may also provide unreliable results.

Known digital one foot scales typically use an average value that is the average calculated value over a longer time, typically several seconds. The variations of the weigh results for the same person will be significant. A solution to this problem would be for the person to balance on the scale for an unrealistically long time. This would be inconvenient for daily use as the average time would be too long. Accordingly, there is a need to provide an improved one foot scale.

GB 2187852 describes a portable scale comprising a housing with a platform sized so as to accommodate thereon, during weighing operations, one foot or shoe of a person, and means for displaying the weighing operation. GB 2187852 also discloses means for averaging former weighing operations held in a memory and comparing the average with the displayed weight. This type of weighing does not give a result with good accuracy.

### Summary

In order to improve on prior art solutions there is provided, according to a first aspect, a scale for weighing a human comprising a housing, where the housing comprises a surface part having a size of at least half of a foot that is connected to at least one weight detecting means. The weight detecting means are configured to provide a sequence of digital sample values to a processing unit. The processing unit is configured to calculate an average weight of the human from the sequence of digital samples, and an output unit that provides the calculated weight of the human.

The drawbacks as discussed above are addressed by providing a calculated average weight out of the sequence of digital samples. This will provide an accurate weighing operation using only a small size surface part.

Embodiments of the scale include those where the output unit is configured to display the calculated weight and/or to provide an audio output representing the weight. Thus, the result of the weighing can be communicated visually and acoustically.

Embodiments of the scale include those where the processing unit is configured to provide a signal to the output unit when a number of samples have been provided that is enough to calculate the weight. That is, an output signal may confirm that the processor unit has received enough samples to make an accurate calculation. Both a display and the audio output can communicate if a calculation has not been sufficiently done based on the signals from the processing unit.

Embodiments of the scale include those where processor unit is configured to calculate the average weight by selecting a subset of samples, where the subset is determined by calculating a threshold weight. The subset may then be determined by selecting all samples from the first sample that is larger than the threshold to the last sample that is larger than the threshold.

Embodiments of the scale include those where processor unit is configured to calculate the average weight by selecting a subset of samples, where the subset is determined by calculating a threshold weight. The subset may then be determined by selecting all samples from the first sample that is less than the threshold after the first sample that is larger than the threshold to the last sample that is larger than the threshold. Such a selection will reduce the number of samples that are larger than the threshold.

Embodiments of the scale include those where processor unit is configured to calculate the average weight by selecting a subset of samples, where the subset is determined by calculating a threshold weight. The subset may then be determined by selecting all samples from the subset being all samples from the first sample that is larger than the threshold to the last sample that is less than the threshold before the last sample that is larger then the threshold. Such a selection will reduce the number of samples that are larger than the threshold.

The threshold may be an average value of all sample values multiplied with a correction factor. This improves calculation of an accurate average value.

Embodiments include those where the surface part is to receive at least a part of a foot. The advantage of such embodiments being that the scale will be small, esthetical and only need a part of a foot.

Further, an indicator may be comprised in the scale, configured to provide an indicator signal when the weight has been calculated. This is to notify that the calculations are sufficient enough and a reliable weight has been obtained.

### Brief description of the drawings

Embodiments will now be described with reference to the attached drawings, where:
figure 1a schematically illustrates a side view of a scale,
figure 1b schematically illustrates a top view of the scale,
figure 2 illustrates a graph of weight samples,
figure 3 illustrates a flow chart of a weight calculation process.

### Detailed description of embodiments

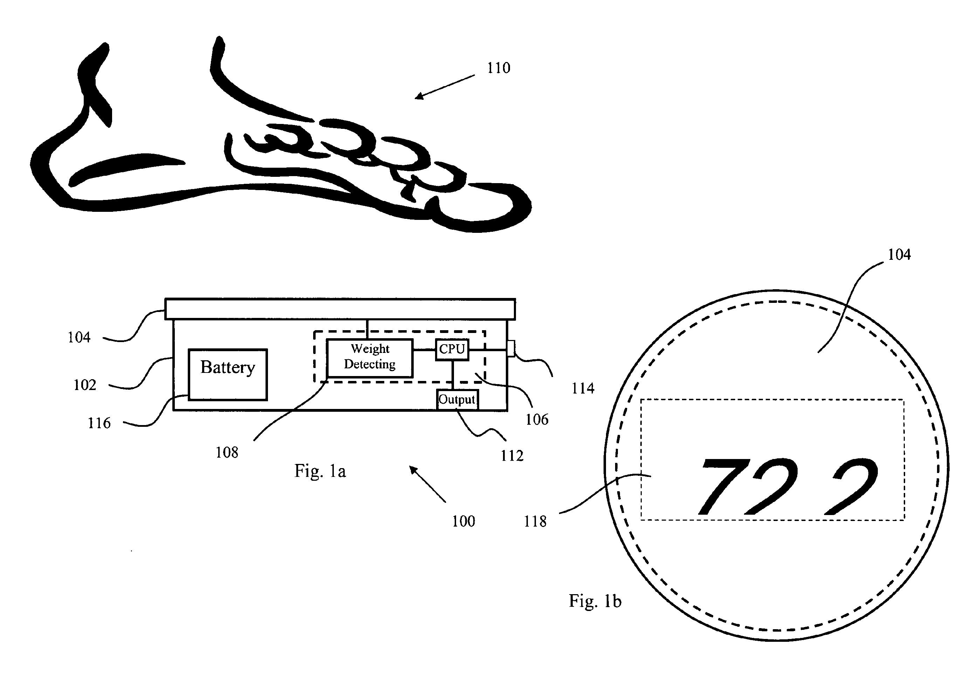

Figure 1 a schematically illustrates a side view of a housing 102 of a scale 100. The housing 102 comprises a bottom part, like a bowl with a flat bottom and a top part. The top part is a foot surface part 104 which covers the bottom part like a lid. The scale 100 comprises a weight detecting means 108, a processing unit 106, an output unit 112, an indicator 114 and a battery 116. The weight detecting means 108 is connected to the top surface part 104 and to the processing unit 106 for handling a signal from the weight detecting means 108. The top surface part 104 is configured to receive at least a part of a foot 110 that starts a weight calculation process which is handled by the processing unit 106. An indicator 114 and the output 112 are connected to the processing unit 106. As will be described in more detail below, the indicator 114 indicates when enough signals, being enough samples, has been received by the processing unit 106 to start the calculation process of the samples. The output 112 can be used for displaying or audibly or both convey the result.

Figure 1b schematically illustrates a top view of the scale 100. It is shown that the output unit is in the form of a display 118, for displaying results, incorporated in the foot surface part 104. A display 118 can also be an external device that is to be coupled to the scale 100.

The size of the scale 100 is to be at least the width of an adult foot. Naturally the scale 100 is adapted to receive the ball of the foot 110 and, possibly also, partially the toes of any human, large or small.

Although the scale has been illustrated as being essentially circular in shape, other shapes, such as triangular, rectangular, pentangular, hexagonal, septagonal, octagonal etc, are also feasible as the skilled person will realize.

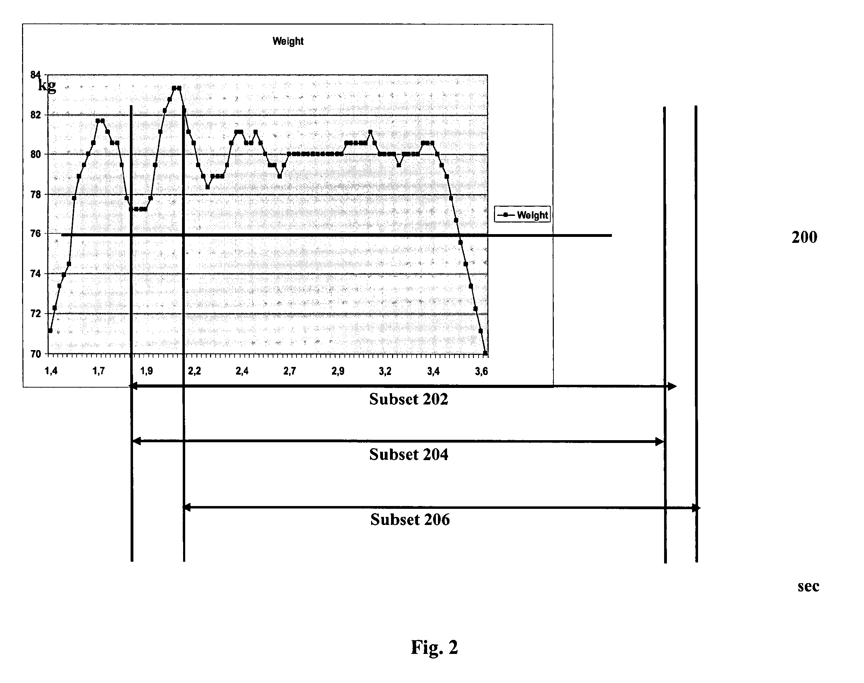

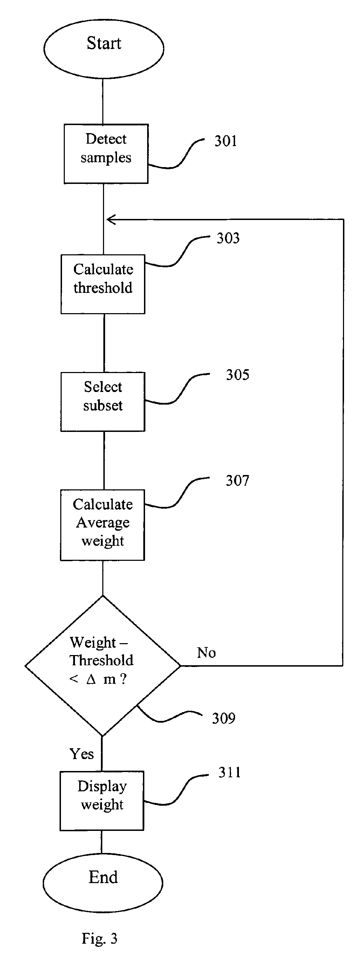

When measuring the weight, the measuring process cycle may be as follows:
1: The person commences to stand on the scale 100 and it starts to obtain samples of weight. The scale is preferably configured such that it is not necessary to turn it on prior to stepping onto the scale.
2: The full weight of the person is now on the ball of the foot on the scale's foot surface part 104 and the weight samples will now change between under and over the average weight because of muscle vibrations and mass centre flux rations.
3: A measurement algorithm running in the processing unit 106 estimates that the number of samples are sufficient and a beep is made to notify the person that it is ok to remove the foot from the scale 100.
4: The person commences getting off the weight from the scale 100 and the measured weight samples get smaller because of the mass centre lowering and the second foot taking over the weight of the person.
5: The scale 100 is without load and the tare (zero value) is measured. This is performed to accommodate for any properties of the weight detecting means 108, electronics or mechanical supports being changed since previous measurement.
6: The weight is calculated by using the sequence of samples weight values as will be described in the following with reference to fig. 2 and fig 3.

Figure 3 illustrates an algorithm for calculating the weight of a person. The algorithm is an iterative process and involves the use of an initial threshold weight value (as shown in fig. 2 by 200) to define a subset of samples to use to calculate the weight. The calculated weight is then used as a new threshold and the process is iterated until convergence is reached.

In other words, in a detecting step 301 weight samples are obtained as summarized above. In a calculating step 303 an initial threshold weight value is calculated as an average value of the obtained subset of samples. This initial threshold weight is preferably corrected by multiplication with a correction factor, e.g. 0.95, in order to enable a fast convergence in the following iterations.

In a selecting step 305 a subset of samples is selected from all samples, from the first sample that is larger than the estimated threshold to the last sample that is larger than the estimated threshold (as shown in fig. 2 by subset 202). This selected subset of samples is then used to calculate the average weight in a calculating step 307. Step 309 is a comparison step where the calculated weight is compared with the estimated weight threshold. If the difference is smaller than a predetermined convergence criterion the weight is displayed in the displaying step 311. But if the difference weight is larger than the convergence criterion then the weight threshold will be recalculated from the calculating step 303 again in one or more iterations, and the difference between the calculated weight and the weight threshold will be smaller for each iteration.

During an iteration, in the selecting step 305, another subset of samples can be selected, being all samples in the range from the first sample that is less than the estimated threshold after the first sample that is larger than the estimated threshold to the last sample that is larger than the estimated threshold (as shown in fig. 2 by subset 206).

Yet another subset of samples can be selected, in the selecting step 305, being all samples in the range from the first sample that is larger than the estimated threshold to the last sample that is less than the estimated threshold before the last sample that is larger than the estimated threshold (as shown in fig. 2 by subset 204).

Tests have shown that, by using the subset 202, a reliable result can be obtained in very few iterations.

Thereafter the result will be mediated in a displaying step 311 to the display or audibly or both.

## Claims

1. A scale (100) for weighing a human comprising;
- a housing (102),
- the housing (102) comprising a surface part (104), having a size of at least half of a foot (110), connected to at least one weight detecting means (108),
- the weight detecting means (108) configured to provide a sequence of digital sample values to a processing unit 106,
- the processing unit (106) configured to calculate an average weight of the human from the sequence of digital samples; and
- an output unit (112) for providing the calculated weight of the human.

2. The scale (100) according to claim 1 wherein the output unit (112) is configured to display the calculated weight.

3. The scale (100) according to claim 1 or 2 wherein the output unit (112) is configured to provide an audio output.

4. The scale (100) according to any of claims 1 to 3 wherein the processor unit (106) is configured to provide a signal to the output unit (112) when a number of samples have been provided that is enough to calculate the weight.

5. The scale (100) according to any of claims 1 to 4 wherein the processor unit (106) is configured to calculate the average weight by selecting a subset of samples.

6. The scale (100) according to claim 4 wherein the processor unit (106) is configured to calculate the average weight by selecting a subset of samples, where the subset is determined by
- calculating a threshold weight,
- selecting the subset such that the subset being all samples from the first sample that is larger than the threshold to the last sample that is larger than the threshold (202).

7. The scale (100) according to claim 4 wherein the processor unit (106) is configured to calculate the average weight by selecting a subset of samples, where the subset is determined by
- calculating a threshold weight,
- selecting the subset such that the subset being all samples from the first sample that is less than the threshold after the first sample that is larger than the threshold to the last sample that is larger than the threshold (206).

8. The scale (100) according to claim 4 wherein the processor unit (106) is configured to calculate the average weight by selecting a subset of samples, where the subset is determined by
- calculating a threshold weight,
- selecting the subset such that the subset being all samples from the subset being all samples from the first sample that is larger than the threshold to the last sample that is less than the threshold before the last sample that is larger then the threshold (204).

9. The scale (100) according to any of claims 5 to 7 wherein the threshold is an average value of all sample values multiplied with a correction factor.

10. The scale (100) according to any of claims 6 to 9, where the calculation of the threshold weight and the selection of the subset is an iterative process.

11. The scale (100) according to any of claims 1 to 10 wherein the surface part (104) is configured to receive at least a ball part of a foot (110).

12. The scale (100) according any of claims 1 to 11 comprising an indicator (114) that is configured to provide an indicator signal when the weight has been calculated.
